# EUROPEAN PATENT SPECIFICATION

(11) **EP 0 906 697 B1**
(45) Date of publication and mention of the grant of the patent: **12.09.2001**
(21) Application number: 97930066.2
(22) Date of filing: 17.06.1997
(51) Int. Cl.: H04N 7/169

(54) **METHOD AND APPARATUS FOR MINIMIZING CHROMA SUBCARRIER INSTABILITY CAUSED BY VIDEO LINE SCRAMBLING**
VERFAHREN UND VORRICHTUNG ZUR UNTERDRÜCKUNG VON DURCH VIDEOZEILENVERSCHLÜSSELUNG ENTSTANDENER FARBHILFSTRÄGERINSTABILITÄT
PROCEDE ET SYSTEME POUR MINIMISER L'INSTABILITE DE LA SOUS-PORTEUSE DE CHROMINANCE CAUSEE PAR UN BROUILLAGE DES LIGNES VIDEO

(30) Priority: 17.06.1996 US 11584 P
(43) Date of publication of application: 07.04.1999
(73) Proprietor: MACROVISION CORPORATION, Sunnyvale, CA 94089 (US)
(72) Inventor: QUAN, Ronald, Cupertino, CA 95014 (US)
(74) Representative: Needle, Jacqueline
(86) International application number: US9710487
(87) International publication number: WO9749247

(56) References cited:
- GB-A- 2 085 693
- US-A- 5 504 815
- PATENT ABSTRACTS OF JAPAN vol. 012, no. 403 (E-674), 26 October 1988 & JP 63 142997 A (MITSUBISHI ELECTRIC CORP), 15 June 1988,

## Description

The present invention relates to a method and apparatus for minimizing chroma subcarrier instability in a scrambled video signal.

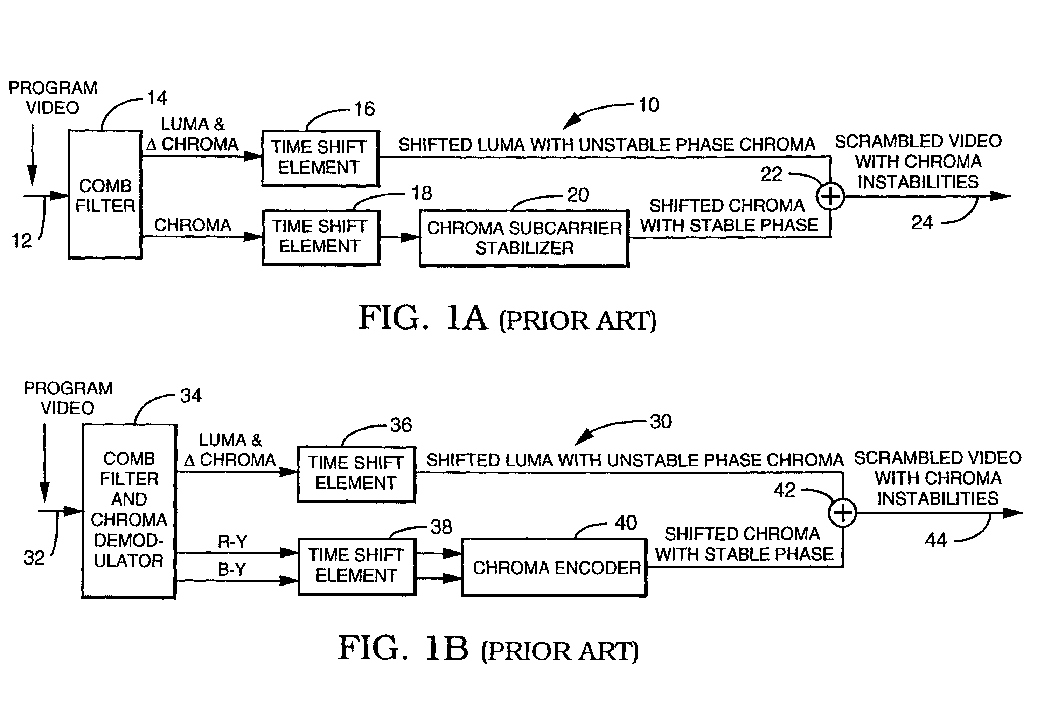

U.S. patents Nos. Re. 35,078, 5,438,620, and 5,504,815, disclose typical line positional shifting video scrambler processes and apparatus. Such line positional or time shifting video scramblers include a video comb filter or equivalent luminance/chrominance separator to separate the composite input signal into luminance and chrominance components (See Figure 1A) or luminance and demodulated chrominance R-Y and B-Y components (see Figure 1B). The separated signals are then shifted in time or position via suitable memories, such as first-in-first-out (FIFO) memories, or variable delay lines. In Figure 1A, the chrominance signal is first time shifted (that is, scrambled) and is then color subcarrier stabilized in both phase and frequency (for example, via a heterodyning process), before being added to the scrambled luminance signal, to provide a composite color stabilized time or position modulated scrambled video output signal. In Figure 1B, where the R-Y and B-Y demodulated chrominance components are provided, the time shifted or position modulated R-Y and B-Y components are re-encoded with a stable color subcarrier frequency and phase before being added to the time shifted or position modulated luminance signal to provide a composite color stabilized time shifted or position modulated scrambled video output signal.

However, the video comb filter or luminance/chrominance separator of the above scrambling systems does not provide perfect separation of the chrominance (chroma) and luminance (luma) components and residual chroma remains in the luma channel. Normally, imperfect luminance-chrominance separation is not a problem in equipment such as television sets. That is, in such equipment, the residual chrominance in the luminance channel still is stable chrominance and thus does not contribute to chrominance instabilities in, for example, the television set. However, once the luma channel is time shifted by the scrambling process, the residual chroma becomes unstable in phase and frequency. When the time shifted or (low frequency) position modulated luminance channel signal with the unstable residual chroma is added to the stabilized time shifted chroma channel signal, a composite video signal is produced with small, but visible, unstable chroma phase and amplitude errors when scrambled and later descrambled. These unstable chroma phase and amplitude errors cause low frequency color streaking or hue and saturation noise throughout the television field.

Figure 1A illustrates a basic video path for a scrambling system 10 which employs a signal wobbling technique, for example, as described in U.S. patents Nos. 5,438,620 and 5,504,814, referred to above. A program video signal, such as a composite video signal, is supplied via an input lead 12 to a comb filter 14. The comb filter 14 provides outputs of a luma signal with residual chroma, and a chroma signal. The luma signal along with its residual chroma are supplied to a time shift element 16 to effect the scrambling process, whereby the element 16, provides a shifted luma signal with shifted unstable phase residual chroma. The chroma signal is supplied to a second time shift element 18 which provides the previously mentioned scrambling of the chroma signal. Both of the time shift elements shift the video signal by an equal amount as part of the particular scrambling process used. The output of the time shift element 18, comprising the time shifted chroma signal, is supplied to a chroma subcarrier stabilizer 20 which provides a shifted chroma signal with stable phase. The outputs of the chroma subcarrier stabilizer 20 and of the time shift element 16 are supplied to the inputs of an adder circuit 22, which produces a scrambled video signal having chroma subcarrier instabilities on an output lead 24.

Figure 1B illustrates a basic video path for a scrambling system 30 which employs a signal wobbling technique for example, as described in U.S. patent Re 35,078 referred to above. A program video signal, such as a composite video signal, is supplied via an input lead 32 to a comb filter/chroma demodulator circuit 34 which outputs a luma signal with some residual chroma, a R-Y component and a B-Y component. The luma signal along with its residual chroma are supplied to a time shift or position modulation element 36, which provides a scrambled luma signal formed of a shifted luma signal with shifted unstable phase residual chroma. The R-Y and B-Y signals are supplied to a two channel time shift element 38 which provides scrambled R-Y and B-Y component signals. The time shift elements 36, 38 shift the respective video signal by an equal amount as part of the scrambling process. The outputs of the time shift element 38, comprising the time shifted or position modulatied R-Y and B-Y signals, are supplied to a chroma encoder 40 which provides a scrambled chroma signal with stable phase. The outputs of the chroma encoder 40 and of the time shift element 36 are supplied to the inputs of an adder circuit 42, which produces a scrambled video signal having chroma subcarrier instabilities on an output lead 44.

GB-A-2085693 describes a method of processing color video signals to reduce cross-color and color-fringing components by attenuating a chrominance signal in response to control pulses obtained by amplitude-clipping a luminance signal. However, there is no suggestion that such clipping might be used in the context of video scrambling.

US-A-5504815, as set out above, discloses a method of scrambling a color television signal by separating it into luminance and chrominance components, shifting the luminance and chrominance components and summing the shifted components. However, and as described above, the separation of the luminance and chrominance components can be imperfect and lead to chroma subcarrier instabilities in the scrambled video signal.

The present invention seeks to minimise chroma subcarrier instability in a scrambled video signal produced by a method of the type described.

According to a first aspect of the present invention there is provided a method of minimizing chroma subcarrier instability in a line scrambled video signal, where the chrominance signal has been imperfectly separated from the luminance signal to produce a chrominance signal, and a luminance signal with residual chroma, the method comprising the steps of:
time or position shifting the chrominance signal to provide a scrambled chrominance signal having stable chroma;
time or position shifting the luminance signal to provide a scrambled luminance signal containing unstable residual chroma;
coring the scrambled luminance signal to limit passage of the unstable residual chroma in the luminance signal whilst allowing passage of signals of levels greater than the unstable residual chroma, to provide a scrambled luminance signal with minimized unstable residual chroma; and
summing the scrambled chrominance signal having stable chroma with the scrambled luminance signal with minimized unstable residual chroma, to provide the line scrambled video with minimized chroma subcarrier instability.

The present invention also extends to a method of minimizing chroma subcarrier instability in a video signal scrambled via a line scrambling process, wherein imperfect separation of the chrominance and luminance signals during the scrambling process provides a luminance signal with residual chroma, and the scrambling process generates a scrambled chrominance signal and an unstable residual chroma signal in the scrambled luminance signal, the method comprising the steps of:
providing a threshold determinative of low level chroma components which are to be denied passage;
coring the luminance signal with residual chroma, or the luminance signal with unstable residual chroma, at said threshold to allow passage of signal levels greater than the threshold whilst substantially denying passage of the residual or unstable residual chroma signal levels less than the threshold; and
combining the cored scrambled luminance signal with the scrambled chrominance signal to produce the line scrambled video signal with minimized chroma subcarrier instability.

It has been found that embodiments of a method of the invention substantially remove the unstable residual chroma color subcarrier caused by the small amount of chroma signal which leaks into the luma channel so that when the signal in the positionally modulated or time shifted luminance channel is summed with the signal in the positionally modulated or time shifted stable chroma color subcarrier channel, color instabilities are substantially reduced to a minimum.

According to a further aspect of the present invention there is provided apparatus for minimizing chroma subcarrier instability in a line scrambled video signal, where the chrominance signal has been imperfectly separated from the luminance signal to produce a chrominance signal and a luminance signal containing residual chroma, the apparatus comprising:
time or position shifting means for scrambling the luminance signal containing residual chroma to produce a scrambled luminance signal having unstable residual chroma;
time or position shifting means for providing a scrambled chrominance signal having stable chroma;
chroma coring means receiving the scrambled luminance signal having unstable residual chroma and arranged to limit passage of the unstable residual chroma in the luminance signal whilst allowing passage of signals of levels greater than the unstable residual chroma, to provide a scrambled luminance signal with minimized unstable residual chroma; and
summing means for combining the scrambled chrominance signal having stable chroma with the scrambled luminance signal with minimized unstable residual chroma, to provide the line scrambled video signal with minimized chroma subcarrier instability.

The invention also extends to apparatus for minimizing chroma subcarrier instability in a video signal scrambled via a line scrambling system, wherein imperfect separation of the chrominance and luminance signals during the scrambling process provides a luminance signal with residual chroma, and the scrambling process generates a scrambled chrominance signal and a scrambled luminance signal having unstable residual chroma, the apparatus comprising:
chroma coring means receiving the luminance signal containing residual chroma and arranged to substantially deny passage of the residual chroma whilst allowing passage of signals of levels greater than the residual chroma, said chroma coring means defining a threshold determinative of low level chroma components which are to be denied passage; and
summing means for combining the scrambled chrominance signal having stable chroma with the scrambled luminance signal with minimized unstable residual chroma, to provide the line scrambled video signal with minimized chroma subcarrier instability.

In an embodiment, said chroma coring means comprises an adaptive chroma coring system which variably adjusts the amount of coring applied in accordance with the chroma amplitude sensed in the chrominance signal in the scrambled stabilized chroma color subcarrier channel, or in a signal derived from a video comb filter in the chrominance channel. For example, if the program video input signal has large areas of highly saturated color components, the chroma coring is electronically turned up. At the other extreme, if the program video signal is substantially in black and white (no color content), then the coring circuit is substantially electronically turned off. Thus, the adaptive coring technique maximizes the frequency and pulse response for black and white signals.

A method and apparatus of the invention may be used to enhance the luminance-chrominance separation of video comb filters frequently used in other video circuits and systems such as television sets and video recorders.

Embodiments of the present invention will hereinafter be described, by way of example, with reference to the accompanying drawings, in which:-
Figure 1A is a block diagram of a prior art positionally shifted video scrambler using luminance/chrominance comb filtering;
Figure 1B is a block diagram of a prior art positionally shifted video scrambler using comb filtering with luminance and demodulated chroma, R-Y and B-Y components;
Figure 1C is a schematic diagram depicting a basic typical coring circuit;
Figure 1D is a graph illustrating a transfer function of the coring circuit of, for example, Figure 1C;
Figure 2A is a block diagram illustrating a video scrambler of an embodiment using comb filtering;
Figure 2B is a block diagram illustrating a video scrambler of an alternative embodiment using comb filtering of luminance and demodulated chroma;
Figure 2C is a graph illustrating the chroma coring effect on the luma channel signal as a function of input signal level;
Figure 3 is a block diagram illustrating an embodiment of a chroma coring circuit;
Figure 4 is a block diagram illustrating an alternative embodiment comprising an adaptive chroma coring circuit;
Figure 5 is a schematic diagram illustrating further details of the circuits of Figures 3 and 4;
Figure 6 is a schematic diagram illustrating details of an adaptive chroma coring circuit; and
Figure 7 is a block diagram illustrating an alternative embodiment of a coring circuit configured to include adaptive and/or fixed coring around the chroma frequencies.

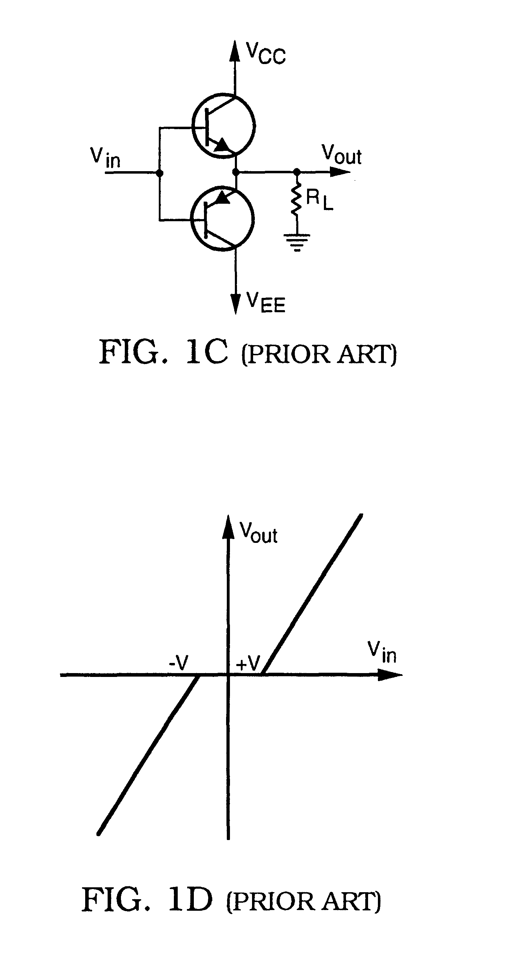

Signal coring is a process whereby low level signals below a selected amplitude are denied passage through a specific circuit, whilst signals greater than the selected amplitude are allowed passage through the circuit. In embodiments of the invention, coring is used to enhance the luminance and chrominance separation of a comb filter. A complementary class B or C transistor amplifier with crossover distortion is an example of a coring circuit as depicted in Figure 1C. Any input signal in between about +0.7 volt to -0.7 volt will be denied passage whereas all other signals greater than about 0.7 volt in absolute value are allowed passage. The coring circuit can be placed before or after the time shifting element (i.e., the memory, FIFO, delay line, etc.) of a video scrambler's luminance channel.

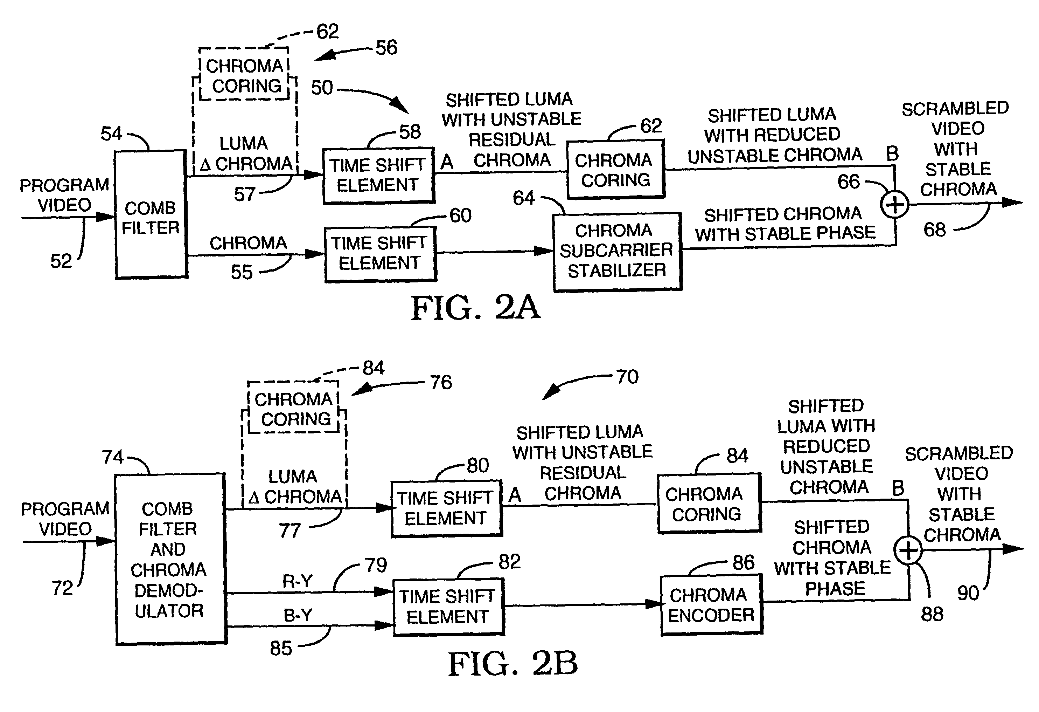

In the embodiments illustrated in Figures 2A and 2B, the coring is done after the luminance channel has been time shifted to provide scrambling. Also the coring is done by the inverted summing (subtraction) of a portion of the output signal of an amplifier that limits or clips an input signal. Thus, at low input signal levels, such as, for example, +0.1 to -0.1 volt signals (or smaller), the subtraction is complete because the amplifier is operating in its linear range. However, at selected higher signal levels over the 0.1 volt absolute, (or smaller than 0.1 volt), subtraction is limited and accordingly most of the higher input signals are allowed passage. Figure 1D depicts generally the transfer characteristic of a coring circuit. For a circuit such as illustrated in Figure 1C, the deadband voltage, V, is about 0.7 volt. In a coring circuit using a transistor differential pair, the deadband voltage, V, is 0.1 volt or less.

Figure 2A shows a system level block diagram of scrambling system 50 using a comb filter 54. A composite program video signal on an input lead 52 is supplied to the comb filter 54, which is similar to the comb filter 14 of Figure 1A. The comb filter 54 supplies outputs comprised of a luma signal on a lead 57 that contains residual chroma, and a chroma signal on lead 55. These two signals are supplied to a time shift element 58 and a time shift element 60, respectively. A chroma coring circuit 62 is preferably inserted after the element 58 and thus between points A and B in the luma channel of Figure 2A. The placement of the chroma coring circuit at this location in the scrambling system, provides a time shifted luma signal with zero, or a much reduced, time shifted unstable residual chroma. However, as an alternative, the chroma coring circuit 62 may be inserted prior to the element 58 at a location 56 between the comb filter 54 and the time shift element 58, as depicted in dashed lines. The chroma channel contains a time shift element 60 for time shifting, that is, scrambling the chroma signal, and a color subcarrier stabilizer 64 which stabilizes the color subcarrier in both phase and frequency, for example, by way of a heterodyning process. The stabilized time shifted chroma and the time shifted luma with minimized time shifted residual chroma are combined in an adder 66 to produce a scrambled video signal having a stable noise free chroma component on an output lead 68.

Figure 2B illustrates a system level block diagram of a scrambling system 70 using a comb filter and chroma demodulator 74. A coring circuit 84 is depicted inserted after a time shift element 80 and thus between points A and B in the luma channel. However, the coring circuit 84 may alternatively be inserted prior to the elements 80 as depicted in dashed lines at 76. As previously described, small amounts of unstable chroma component due to the imperfect comb filter are removed by the chroma coring circuit 84.

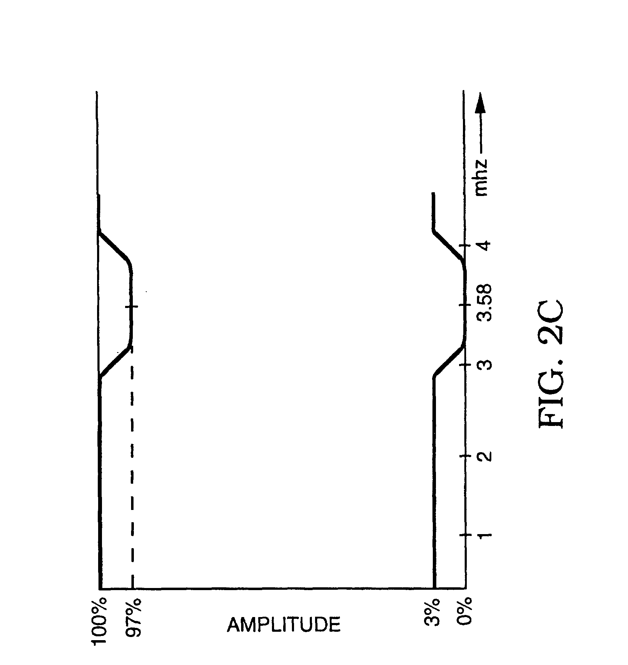

Thus, the chroma coring circuits 62, 84 of Figures 2A and 2B remove from the luma signal, low level signals whose frequencies are in the region of the color subcarrier frequency. These low level signals constitute the chroma which is not removed from the luma signal by the comb filters 54 and 74, or an equivalent circuit. Larger level signals pass through the chroma coring circuits. For example, the chroma coring circuits 62, 84 of Figures 2A, 2B are each set to remove no more than 3% of the nominal signal level around 3.58MHz. This means that if a scrambled luma channel has a residual chroma component of 3% or less, the chroma coring circuit will completely or substantially remove the unstable chroma component. Figure 2C depicts the chroma coring effect on the luma channel as a function of input level. In practice, depending on cost, comb filters in general produce a residual chroma component in the luma channel from about 3% to about 0.3%.

It should be noted that the chroma coring system also reduces random noise in the luminance channel caused by quantizing noise or noise in the video frequency band. In general, the chroma coring can be more generic. By coring small signals above 500 kHzm the circuit not only eliminates residual (unstable) chroma from the scrambled luminance channel, but also reduces video noise present in the luminance channel.

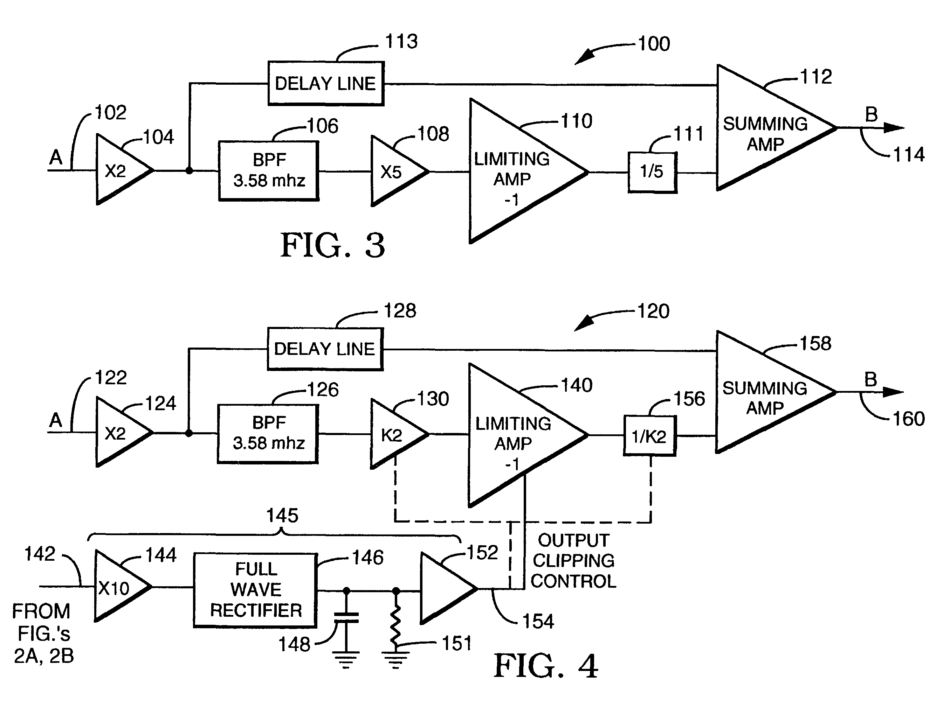

Figure 3 illustrates an embodiment of a chroma coring circuit 100 which may be employed as circuit 62 or 84 of Figures 2A, 2B. The signal at point A is the time shifted luminance signal with an unstable residual chroma component, and the signal is supplied via a lead 102 to an amplifier 104, which, for example, has a gain of two. The output of the amplifier 104 is supplied to a bandpass filter 106. The filter 106 may be a low Q bandpass filter set at the color subcarrier frequency of 3.58 mhz, for example, or some other filter such as a high pass filter set at about 500 kHz, wherein the bandpass filter cores the unstable residual chroma while the high pass filter removes other video noise. The output of the filter 106 is amplified by an amplifier 108, which has, for example a gain of five, and then is supplied to an amplifier with limited headroom (or positive and negative clippers) such as a limiting amplifier 110. This limiting amplifier may be a transistor differential pair amplifier with maximum input of about +/-100 millivolts, as further described below. The differential pair amplifier 110 may have a gain of minus unity for inputs less than +/-100 millivolts and thus limits or clips signals having greater input levels. The output of the differential pair amplifier 110 is attenuated in this example by 1/5 in an attenuator 111, and is then supplied to a first input of a summing amplifier 112. The output of the amplifier 104 also drives a delay line 113 (or low pass filter) arranged to match the delay caused by the filter 106, the amplifier 108, the limiting amplifier 110 and the attenuator 111. The output of the delay line 113 is supplied to a second input of the summing amplifier 112. Typically the luminance level at A is 700 millivolts. The output of the delay line 113 thus is 1400 millivolts and the output of the 1/5 attenuator 111 is 40 millivolts. The output of the summing amplifier 112 then will subtract up to 40 millivolts (about 3 % or 40/1400) of residual chroma from the luma channel signal provided on output lead 114 corresponding to point B of Figures 2A, 2B.

Figure 4 illustrates an embodiment of an adaptive coring circuit 120 which uses the chroma signal amplitude in the chroma channel, that has been time or position shifted, to modulate the amount of coring applied to the luma channel. In this respect, the circuit elements of Figure 4 may be similar in configuration and function to the corresponding elements in Figure 3. Coring depth is controlled by varying the maximum output level of a limiting amplifier 140, whilst keeping its small signal gain constant. To this end, the chroma channel signal from, for example, the color subcarrier stabilizer 64 or chroma encoder 86 of Figures 2A, 2B, respectively, is supplied via a lead 142 to an amplifier 144 of an adaptive coring control circuit 145. The amplified signal is supplied to a full wave rectifier (or envelope detector) 146, and the resulting signal is smoothed via a capacitor/resistor network 148/151. An amplifier 152 supplies a voltage from the control circuit 145 which is proportional to the chroma signal amplitude, to control the output level of the limiting amplifier 140. Thus, the higher the color saturation, the higher the clipping level of the limiting amplifier 140 is raised. This raises the amount of chroma frequency coring. Conversely, if there is a lack of color in the program video, the clipping level is reduced which provides very little, or zero, coring of the signal in the luminance channel. The resulting adaptively cored signal is supplied at B on an output lead 160.

Figure 4 illustrates one of various ways of providing adaptive coring using an adaptive coring control circuit. Alternatively, for example, it is possible to supply the output of the amplifier 152 to control the circuits 130 and 156 instead, such that a value K2 of circuit 130 varies inversely with the chroma amplitude in the time shifted chroma channel to keep the limiting amplifier 140 at a corresponding fixed clipping level. For instance, if the chroma level is low, the value K2 should be large, for example, K2 ≈ 10, for about 1.5% of coring. If the chroma level is higher, K2 should be lower, for example, about 5 for about 3% of coring.

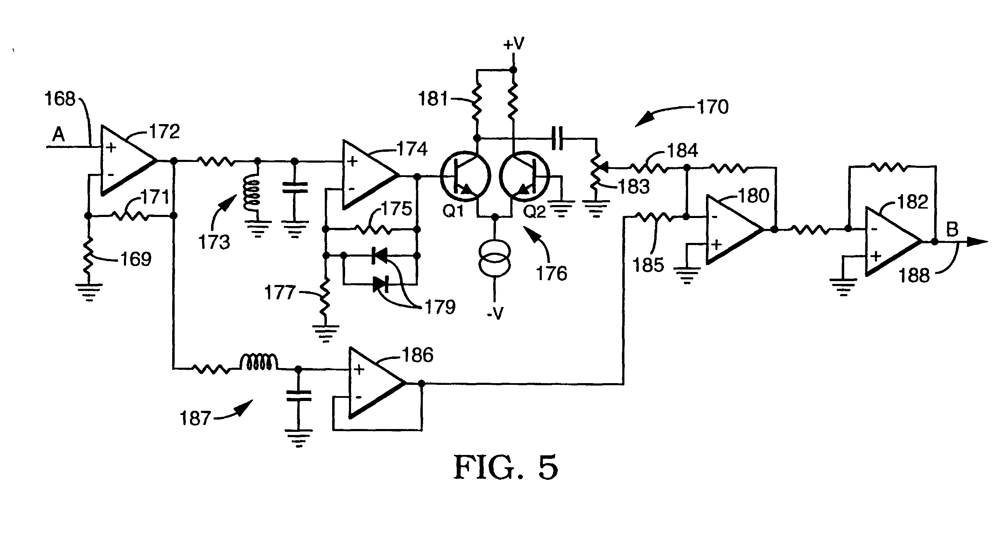

Figure 5 illustrates a modified embodiment of a coring circuit 170 which has a fixed level of coring. The circuit elements of Figure 5 may be similar in configuration and function to the corresponding elements in Figures 3 and 4. As previously, the coring circuit of Figure 5 can be inserted either prior to or after the time shift element of, for example, Figures 2A and 2B, to remove chroma instabilities in the scrambled composite video signal.

In the coring circuit 170 of Figure 5, the time shifted luma with unstable residual chroma is supplied via a lead 168 and is amplified by a feed back amplifier 172, with a gain of two set by resistors 169, 171. The output of the amplifier 172 is supplied to a chroma bandpass filter of Q less than two, formed of a resistor/inductor/capacitor network 173. The output of chroma bandpass filter 173 is supplied to a non-inverting input of an amplifier 174. Amplifier 174 is set at a gain which determines the coring depth. For example, if the amplifier 174 is set to have a gain of five, by way of resistors 175, 177 coupled to its inverting input, the coring depth is about 3% to 3.5%. If the amplifier 174 is set to have a gain of seven, the coring depth is about 2% to 2.5%. Diodes 179 limit the amplifier 174 output to about 1.4 volts peak-to-peak, to ensure that the output of the amplifier 174 does not reverse breakdown Q1 and Q2 base emitter junctions of a limiting amplifier 176. The differential amplifier circuit of Q1 and Q2 is used specifically herein as the limiting amplifier 176, with limiting occurring when the voltage at the base of Q1 exceeds about 100 millivolts positive or negative. The inverting output of the amplifier 176 is provided at a collector of Q1 via a resistor 181 and an adjustable resistor 183. A gain of minus 1 is derived via the base of Q1 to the slider of resistor 183 at signals less than 100 millivolts peak into the base of Q1. Amplifier 180 and amplifier 182 form a summing amplifier, with a resistor 185 coupled to the inverting input of amplifier 180 receiving about 1.4 volts of video signal (not including the sync signals) via a delay line formed of a resistor/inductor/capacitor network 187 and a buffer amplifier 186. The delay line is necessary to match the delay in the chroma bandpass filter 173 and the limiting amplifier 176, so that maximum nulling or coring can occur at about the chroma frequency. Because the limiting amplifier 176 outputs 1/5 or 1/7 of a maximum of plus/minus 100 millivolts (200 millivolts peak-to-peak), the maximum subtraction of signals around the chroma frequency via the resistor 185 and a resistor 184 is 200 millivolts/5=40 millivolts (or 200 millivolts/7=28.5 millivolts). Thus the coring depth referenced to the video signal of 1400 millivolts is then 40/1400 or approximately 3%, or 28.6/1400 or approximately 2%.

It should be noted that any coring depth can be achieved by setting the gain of the amplifier 174. Usually it is preferable to use the minimum coring depth needed for an acceptable stable chroma output, because excessive coring will cause an undesirable decrease of luminance detail along with a desirable reduction in luminance noise. If the Q of the chroma bandpass filter 173 is raised to greater than 2, the coring depth can be increased without losing much, or as much, luminance detail, since coring in this case will be around a narrower band in the region of the chroma frequency. However, care must be taken to ensure that the cored signal on an output lead 188, and thus the output of the scrambler system, is still acceptably free of residual chroma instabilities.

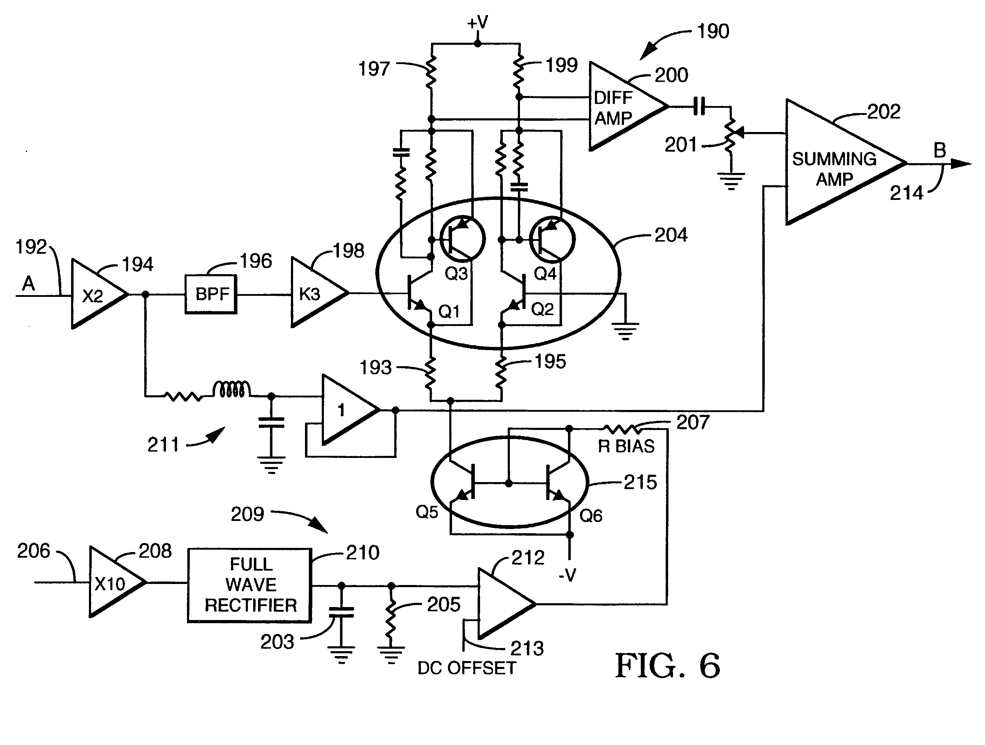

Figure 6 illustrates a further embodiment of an adaptive chroma coring circuit 190 employing an adaptive coring control circuit 209. In this embodiment, the coring depth is adjusted, as in Figure 4, by sensing the chroma channel's signal amplitude. As previously, the coring circuit 190, whether adaptive or fixed, may be inserted after the comb filter and prior to a respective time shift element. The coring circuit 190 of Figure 6 can be utilised when it is required to increase the luminance-chrominance separation for comb filters used in television sets, video recorders, etc.

The circuit elements of the circuit of Figure 6 are similar to those of Figure 5 except that a limiting amplifier 205 in Figure 6, employs transistors Q1, Q2, Q3 and Q4 to form a compound feedback differential amplifier. The gain in limiting amplifier 204 is substantially independent of emitter tail current via the collector current of a transistor Q5 of a transistor pair Q5, Q6, but the output clipping level is proportional to the emitter tail current via the Q5 collector current. The forming of a very high transconductance amplifier via Q1, Q2, Q3, Q4 and resistors 197, 199, and local feedback resistors 193, 195, provides an overall transconductance for the amplifier of about 1/resistor 193. Note that resistors 193, 195 are preferably of equal resistance. The peak clipping output level at resistor 197 and/or resistor 199 is proportional to the emitter tail current (Q5 collector current) multiplied by the resistance of resistor 197. Resistors 197, 199 are output load resistors for the amplifier 204, whose outputs herein are fed to (an optional) differential amplifier 200, which rejects the chroma channel's envelope signal supplied via the output of an amplifier 212 in the adaptive coring control circuit 209. An adjustable resistor 201 is adjusted for the maximum of coring (subtraction) with the output of the limiting amplifier 204. A summing amplifier 202 is coupled to the adjustable resistor 201 and to a delay line 211 which may be similar to the delay lines in the circuits of Figures 3 to 5. The output of the amplifier 202 on an output lead 214 is the luminance signal with minimized unstable chroma.

As in Figure 4, the adaptive coring control circuit 209 of Figure 6 includes an amplifier 208 which amplifies the chroma channel signal on a lead 206 and then supplies the signal to a full wave rectifier 210 (or an envelope detector). The output of the full wave rectifier or envelope detector is smoothed via a charge capacitor 203, which is discharged via a resistor 205. An amplifier 212 outputs a voltage proportional to the chroma signal amplitude. Additionally, a DC offset is supplied at 213 to amplifier 212 to bias a voltage to current converter circuit 215 formed of a bias resistor 207 and the transistors Q3 and Q4. The Q3 collector current is then proportional to the chroma signal amplitude. The higher the color saturation, the higher the Q3 collector current. In turn, the higher clipping level is supplied by the limiting amplifier 204, which raises the amount of chroma frequency coring. If there is no color in the program video signal, then the Q3 collector current approaches zero and the clipping level at resistor 197 or 199 is near zero (for near zero output) and thus there is zero, or very little, coring performed on the luminance channel signal.

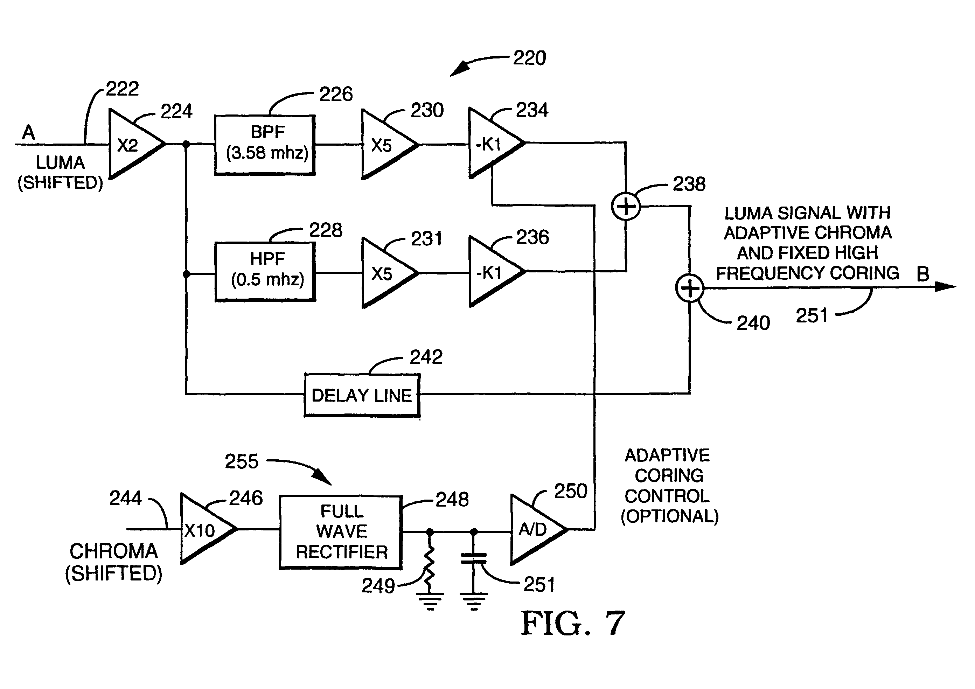

Figure 7 illustrates an embodiment 220 of a multiple band frequency coring system, where coring is done at the chroma frequency via a bandpass filter 226 in a first coring path, and at other frequencies for further noise reduction of the luminance channel signal via a high pass filter 228 in a second parallel coring path. In the circuit of Figure 7, adaptive coring is carried out on the residual chroma frequencies in the first coring path by means of an adaptive coring control circuit 225, whilst there is fixed coring at other frequencies by utilizing the high pass filter 228 in the second parallel coring path. It should be noted that the high pass filter 228 may include a notch filter set at the frequency of the bandpass filter 226 so there is no phase interaction at summing circuits 238 and/or 240.

The additional components 224, 230, 234 are similar to the corresponding components in the circuits illustrated in Figures 3 to 6, and the components 231, 236 in the second parallel coring path of the high pass filter 228 are similar to the corresponding components in the first coring path of the bandpass filter 226. Likewise, a delay line 242 is similar to the delay lines 113, 128, 187-186 and 191-204 provided in the circuits of Figures 3 to 6. Similarly, the adaptive coring control circuit, which is formed of components 246, 248, 250 and 249-251, is similar to the adaptive coring circuits of Figures 4 and 6.

It will be appreciated that this invention can be used to enhance video comb filter performance in television sets. Video tape recorders can utilize the concepts to improve their performance via noise reduction and increased lumachroma separation.

Although the invention has been described and illustrated with reference to specific embodiments, it will be apparent that various modifications and variations may be made thereto within the scope of the invention as defined by the accompanying claims.

## Claims

1. A method of minimizing chroma subcarrier instability in a line scrambled video signal, wherein the chrominance signal has been imperfectly separated from the luminance signal to produce a chrominance signal and a luminance signal with residual chroma, the method comprising the steps of:
time or position shifting the chrominance signal to provide a scrambled chrominance signal having stable chroma;
time or position shifting the luminance signal with residual chroma to provide a scrambled luminance signal containing unstable residual chroma;
coring the scrambled luminance signal to limit passage of the unstable residual chroma in the luminance signal whilst allowing passage of signals of levels greater than the unstable residual chroma, to provide a scrambled luminance signal with minimized unstable residual chroma; and
summing the scrambled chrominance signal having stable chroma with the scrambled luminance signal with minimized unstable residual chroma, to provide the line scrambled video with minimized chroma subcarrier instability.

2. A method as claimed in Claim 1, wherein the step of coring includes:
providing a threshold level commensurate with a selected voltage level of the unstable residual chroma to be limited from passage; and
coring the scrambled unstable residual chroma below said threshold level to substantially remove it from the scrambled luminance signal.

3. A method as claimed in Claim 2, including the step of:
detecting the amplitude of the chrominance signal; and
varying the threshold level in response to the detected amplitude of the chrominance signal to correspondingly vary the amount of coring.

4. A method as claimed in Claim 3, including the steps of:
generating a variable current signal indicative of the chrominance signal amplitude; and
varying the threshold level in response to the variable current signal whilst maintaining signal gain constant.

5. A method as claimed in Claim 3 or Claim 4, wherein the threshold level is set to core from 0% to about 3.5% of the input video signal level around the chroma subcarrier frequency.

6. A method of minimizing chroma subcarrier instability in a video signal scrambled via a line scrambling process, wherein imperfect separation of the chrominance and luminance signals during the scrambling process provides a luminance signal with residual chroma, and the scrambling process generates a scrambled chrominance signal and an unstable residual chroma signal in the scrambled luminance signal, the method comprising the steps of:
providing a threshold determinative of low level chroma components which are to be denied passage in the luminance signal with residual chroma;
coring the luminance signal with residual chroma, or the luminance signal with unstable residual chroma, at said threshold to allow passage of signal levels greater than the threshold whilst substantially denying passage of the residual or unstable residual chroma signal levels less than the threshold; and
combining the cored scrambled luminance signal with the scrambled chrominance signal to produce the line scrambled video signal with minimized chroma subcarrier instability.

7. A method as claimed in Claim 6, wherein the step of coring occurs prior to the line scrambling process and cores the residual chroma.

8. A method as claimed in Claim 6, wherein the step of coring occurs after the line scrambling process and cores the unstable residual chroma.

9. A method as claimed in any of Claims 6 to 8, further comprising the steps of:
detecting the amplitude of the chrominance signal before or after the scrambling process; and
varying the coring threshold to correspondingly vary the depth of coring of the luminance signal in proportion to the detected chrominance signal amplitude.

10. Apparatus for minimizing chroma subcarrier instability in a line scrambled video signal, wherein the chrominance signal has been imperfectly separated from the luminance signal to produce a chrominance signal and a luminance signal containing residual chroma, the apparatus comprising:
time or position shifting means (58, 80) for scrambling the luminance signal containing residual chroma to produce a scrambled luminance signal having unstable residual chroma;
time or position shifting means (60, 82) for providing a scrambled chrominance signal having a stable chroma;
chroma coring means (62, 84, 100, 120, 170, 190, 220) receiving the scrambled luminance signal having unstable residual chroma and arranged to limit passage of the unstable residual chroma in the luminance signal whilst allowing passage of signals of levels greater than the unstable residual chroma, to provide a scrambled luminance signal with minimized unstable residual chroma; and
summing means (66, 88) for combining the scrambled chrominance signal having stable chroma with the scrambled luminance signal with minimized unstable residual chroma, to provide the line scrambled video signal with minimized chroma subcarrier instability.

11. Apparatus for minimizing chroma subcarrier instability in a video signal scrambled via a line scrambling system, wherein imperfect separation of the chrominance and luminance signals during the scrambling process provides a luminance signal with residual chroma, and the scrambling process generates a scrambled chrominance signal and a scrambled luminance signal having unstable residual chroma, the apparatus comprising:
chroma coring means (62, 84, 100, 120, 170, 190, 220) receiving the luminance signal containing residual chroma and arranged to substantially deny passage of the residual chroma whilst allowing passage of signals of levels greater than the residual chroma, said chroma coring means defining a threshold determinative of low level chroma components which are to be denied passage; and
summing means (66, 88) for combining the scrambled chrominance signal having stable chroma with the scrambled luminance signal with minimized unstable residual chroma, to provide the line scrambled video signal with minimized chroma subcarrier instability.

12. Apparatus as claimed in Claim 10 or Claim 11, wherein said coring means (62, 84,100, 120, 170, 190, 220) is disposed in the luminance channel prior to line scrambling means (58, 80) for the luminance signal and cores the residual chroma signals.

13. Apparatus as claimed in Claim 10 or Claim 11, wherein said coring means (62, 84,100, 120, 170, 190, 220) is disposed in the luminance channel after line scrambling means (58, 80) for the luminance signal and cores the unstable residual chroma signals.

14. Apparatus as claimed in any of Claims 10 to 13, wherein said coring means comprises:
means for establishing a coring threshold such that the residual chroma signals are below the threshold and generally are denied passage whilst the signals greater than the residual chroma signals are above the threshold and are allowed passage.

15. Apparatus as claimed In Claim 14, wherein said means for establishing a coring threshold comprises:
limiting amplifier means (110, 140, 176, 204) with a selected maximum input and a gain of minus unity arranged to clip signals of greater than the selected maximum input.

16. Apparatus as claimed in Claim 14, wherein said coring means comprises:
filter means (106, 126, 173, 196, 226) for receiving the luminance signal with residual chroma and for extracting therefrom and supplying a signal at the chroma subcarrier frequency;
limiting amplifier means (110, 140, 176, 204) responsive to the signal supplied from the filter means for clipping the chroma subcarrier frequency signal at said coring threshold; and
a summing amplifier (112, 158; 180, 182; 202, 240) receiving the clipped signal and the luminance signal with residual chroma for supplying a luminance signal with minimized residual chroma to said summing means for combining.

17. Apparatus as claimed in Claim 16, wherein said coring means further comprises:
an amplifier (108, 130) of preselected gain coupled to the filter means (106, 126), said limiting amplifier means being coupled to said amplifier of preselected gain; and
attenuating means (111, 156) coupled to the limiting amplifier means for attenuating the signal by the reciprocal value of the preselected gain of the amplifier.

18. Apparatus as claimed in any of Claims 14 to 17, wherein said means for establishing a coring threshold is arranged to set the threshold level to core from 0% to about 3.5% of the video signal level around the chroma subcarrier frequency.

19. Apparatus as claimed in any of Claims 14 to 18, further comprising:
coring control means (145, 209, 255) for varying the coring threshold in response to the amplitude of the chrominance signal.

20. Apparatus as claimed in Claim 19, wherein the coring control means comprises:
means (146, 210, 248) for detecting the amplitude of the chrominance signal; and
means (152, 212, 250) for providing a variable current control signal in response to the detected chrominance signal amplitude.

## Patentansprüche

1. Verfahren zum Minimieren von Chroma-Unterträger-Instabilität in einem linienverwürfelten Video-Signal, in dem das Chrominanz-Signal nicht perfekt von dem Luminanz-Signal getrennt ist, um ein Chrominanz-Signal und ein Luminanz-Signal mit Rest-Chroma zu erzeugen, wobei das Verfahren die Schritte umfaßt:
Zeit- oder Positionsverschiebung des Chrominanz-Signals, um ein verwürfeltes Chrominanz-Signal mit stabilem Chroma zur Verfügung zu stellen;
Zeit- oder Positionsverschiebung des Luminanz-Signals mit Rest-Chroma, um ein verwürfeltes Luminanz-Signal mit instabilem Rest-Chroma zur Verfügung zu stellen;
Filtern des verwürfelten Luminanz-Signals, um das Durchlassen von dem instabilen Rest-Chroma in dem Luminanz-Signal zu begrenzen, während das Durchlassen von Signalen mit Pegeln ermöglicht wird, die größer als das instabile Rest-Chroma sind, um ein verwürfeltes Luminanz-Signal mit minimiertem instabilen Rest-Chroma zur Verfügung zu stellen; und
Summieren des verwürfelten Chrominanz-Signals mit stabilem Chroma und des verwürfelten Luminanz-Signals mit minimiertem instabilen Rest-Chroma, um ein linienverwürfeltes Video-Signal mit minimierter Chroma-Unterträger-Instabilität zur Verfügung zu stellen.

2. Verfahren nach Anspruch 1, bei dem der Schritt des Filterns umfaßt:
Bereitstellen eines Grenzwertpegels, der einem ausgewählten Spannungspegel des instabilen Rest-Chromas entspricht, um bezüglich des Durchlassens begrenzt zu werden; und
Filtern des verwürfelten instabilen Rest-Chromas unter dem Grenzwertpegel, um dieses im wesentlichen aus dem verwürfelten Luminanz-Signal zu entfernen.

3. Verfahren nach Anspruch 2, mit den Schritten:
Erfassen der Amplitude des Chrominanz-Signals; und
Verändern des Grenzwertpegels in Reaktion auf die erfaßte Amplitude des Chrominanz-Signals, um das Ausmaß des Filterns entsprechend zu verändern.

4. Verfahren nach Anspruch 3, mit den Schritten:
Erzeugen eines variablen Stromsignals, das die Amplitude des Chrominanz-Signals angibt; und
Verändern des Grenzwertpegels in Reaktion auf das variable Stromsignal, während die Signalverstärkung konstant bleibt.

5. Verfahren nach Anspruch 3 oder Anspruch 4, bei dem der Grenzwertpegel eingestellt ist, um von 0% bis etwa 3,5% des eingehenden Video-Signalpegels um die Chroma-Unterträger-Frequenz herum zu filtern.

6. Verfahren zum Minimieren von Chroma-Unterträger-Instabilität in einem Video-Signal, das in einem Linienverwürfelungsprozeß verwürfelt ist, in dem nicht perfektes Trennen des Chrominanz- und Luminanz-Signals während des Verwürfelungsprozesses ein Luminanz-Signal mit Rest-Chroma zur Verfügung stellt, und der Verwürfelungsprozeß ein verwürfeltes Chrominanz-Signal und ein instabiles Rest-Chroma-Signal in dem verwürfelten Luminanz-Signal erzeugt, wobei das Verfahren die Schritte umfaßt:
Bereitstellen eines Grenzwertes, der bestimmend für Chroma-Komponenten mit niedrigem Pegel ist, deren Durchlaß in dem Luminanz-Signal mit Rest-Chroma verhindert werden soll;
Filtern des Luminanz-Signals mit Rest-Chroma oder des Luminanz-Signals mit instabilem Rest-Chroma an dem Grenzwert, um das Durchlassen von Signalpegeln zu ermöglichen, die größer als der Grenzwert sind, während das Durchlassen der Rest-Chroma- oder instabilen Rest-Chroma-Signalpegel verhindert wird, die kleiner als der Grenzwert sind; und
Kombinieren des gefilterten verwürfelten Luminanz-Signals mit dem verwürfelten Chrominanz-Signal, um ein linienverwürfeltes Video-Signal mit minimierter Chroma-Unterträger-Instabilität zu erzeugen.

7. Verfahren nach Anspruch 6, bei dem der Schritt des Filterns vor dem Linienverwürfelungsprozeß stattfindet und das Rest-Chroma filtert.

8. Verfahren nach Anspruch 6, bei dem der Schritt des Filterns nach dem Linienverwürfelungsprozeß stattfindet und das instabile Rest-Chroma filtert.

9. Verfahren nach einem der Ansprüche 6 bis 8, außerdem mit den Schritten:
Erfassen der Amplitude des Chrominanz-Signals vor oder nach dem Verwürfelungsprozeß; und
Verändern des Filter-Grenzwertes, um die Tiefe des Filterns des Luminanz-Signals relativ zu der erfaßten Amplitude des Chrominanz-Signals zu verändern.

10. Vorrichtung zum Minimieren von Chroma-Unterträger-Instabilität in einem linienverwürfelten Video-Signal, in dem das Chrominanz-Signal nicht perfekt von dem Luminanz-Signal getrennt ist, um ein Chrominanz-Signal und ein Luminanz-Signal mit Rest-Chroma zu erzeugen, wobei die Vorrichtung aufweist:
Zeit- oder Positionsverschiebungseinrichtungen (58, 80), um das Luminanz-Signal mit Rest-Chroma zu verwürfeln, um ein verwürfeltes Luminanz-Signal mit instabilem Rest-Chroma zu erzeugen;
Zeit- oder Positionsverschiebungseinrichtungen (60, 82), um ein verwürfeltes Chrominanz-Signal mit stabilem Chroma zur Verfügung zu stellen;
Chroma-Filtereinrichtungen (62, 84, 100, 120, 170, 190, 220), die das verwürfelte Luminanz-Signal mit instabilem Rest-Chroma empfangen und dazu ausgestaltet sind, um das Durchlassen von dem instabilen Rest-Chroma in dem Luminanz-Signal zu begrenzen, während das Durchlassen von Signalen mit Pegeln ermöglicht wird, die größer als das instabile Rest-Chroma sind, um ein verwürfeltes Luminanz-Signal mit minimiertem instabilen Rest-Chroma zur Verfügung zu stellen; und
Summier-Einrichtungen (66, 88), um das verwürfelte Chrominanz-Signal mit stabilem Chroma und das verwürfelte Luminanz-Signal mit minimiertem instabilen Rest-Chroma zu kombinieren, um das linienverwürfelte Video-Signal mit minimierter Chroma-Unterträger-Instabilität zur Verfügung zu stellen.

11. Vorrichtung zum Minimieren von Chroma-Unterträger-Instabilität in einem Video-Signal, das durch ein Linienverwürfelungssystem verwürfelt ist, in dem nicht perfektes Trennen des Chrominanz- und Luminanz-Signals während des Verwürfelungsprozesses ein Luminanz-Signal mit Rest-Chroma zur Verfügung stellt, und der Verwürfelungsprozeß ein verwürfeltes Chrominanz-Signal und ein verwürfeltes Luminanz-Signal mit instabilem Rest-Chroma erzeugt, wobei die Vorrichtung aufweist:
Chroma-Filtereinrichtungen (62, 84, 100, 120, 170, 190, 220), die das Luminanz-Signal mit Rest-Chroma empfangen und dazu ausgestaltet sind, um das Durchlassen von dem Rest-Chroma im wesentlichen zu verhindern, während das Durchlassen von Signalen mit Pegeln ermöglicht wird, die größer als das Rest-Chroma sind, wobei die Chroma-Filtereinrichtungen einen Grenzwert definieren, der bestimmend für Chroma-Komponenten mit geringem Pegel ist, deren Durchlaß verhindert werden soll; und
Summier-Einrichtungen (66, 88), um das verwürfelte Chrominanz-Signal mit stabilem Chroma und das verwürfelte Luminanz-Signal mit minimiertem instabilen Rest-Chroma zu kombinieren, um das linienverwürfelte Video-Signal mit minimierter Chroma-Unterträger-Instabilität zur Verfügung zu stellen.

12. Vorrichtung nach Anspruch 10 oder Anspruch 11, wobei die Filtereinrichtungen (62, 84, 100, 120, 170, 190, 220) in dem Luminanz-Kanal vor den Linienverwürfelungseinrichtungen (58, 80) für das Luminanz-Signal angeordnet sind und die Rest-Chroma-Signale filtern.

13. Vorrichtung nach Anspruch 10 oder Anspruch 11, wobei die Filtereinrichtungen (62, 84, 100, 120, 170, 190, 220) in dem Luminanz-Kanal hinter den Linienverwürfelungseinrichtungen (58, 80) für das Luminanz-Signal angeordnet sind und die instabilen Rest-Chroma-Signale filtern.

14. Vorrichtung nach einem der Ansprüche 10 bis 13, wobei die Filtereinrichtungen aufweisen:
Einrichtungen zum Bereitstellen eines Filter-Grenzwertes, so daß die Rest-Chroma-Signale unter dem Grenzwert liegen und deren Durchlassen im wesentlichen verhindert wird, während die Signale, die größer als die Rest-Chroma-Signale sind, über dem Grenzwert liegen und deren Durchlassen ermöglicht wird.

15. Vorrichtung nach Anspruch 14, wobei die Einrichtungen zum Bereitstellen eines Filter-Grenzwertes aufweisen:
begrenzende Verstärkungseinrichtungen (110, 140, 176, 204) mit einem ausgewählten maximalen Eingang und einer Verstärkung von Minus-Einheit, die dazu ausgestaltet sind, um Signale abzuschneiden, die größer als der ausgewählte maximale Eingang sind.

16. Vorrichtung nach Anspruch 14, wobei die Filtereinrichtungen aufweisen:
Filtereinrichtungen (106, 126, 173, 196, 226), um das Luminanz-Signal mit Rest-Chroma zu empfangen und davon zu extrahieren, und um ein Signal mit der Chroma-Unterträger-Frequenz zur Verfügung zu stellen;
begrenzende Verstärkungseinrichtungen (110, 140, 176, 204), die auf das Signal ansprechen, das von den Filtereinrichtungen zur Verfügung gestellt wird, um das Chroma-Unterträger-Frequenzsignal an dem Filter-Grenzwert abzuschneiden; und
Summier-Verstärkungseinrichtungen (112, 158; 180, 182; 202, 240), die das abgeschnittene Signal und das Luminanz-Signal mit Rest-Chroma empfangen, um ein Luminanz-Signal mit minimiertem Rest-Chroma für die Summier-Einrichtungen zum Kombinieren zur Verfügung zu stellen.

17. Vorrichtung nach Anspruch 16, wobei die Filtereinrichtungen außerdem aufweisen:
einen Verstärker (108, 130) mit vorgewählter Verstärkung, der mit den Filtereinrichtungen (106, 128) gekoppelt ist, wobei die begrenzenden Verstärkungseinrichtungen mit dem Verstärker mit vorgewählter Verstärkung gekoppelt sind; und
Dämpfungseinrichtungen (111, 156), die mit den begrenzenden Verstärkungseinrichtungen gekoppelt sind, um das Signal mit dem reziproken Wert der vorgewählten Verstärkung des Verstärkers zu dämpfen.

18. Vorrichtung nach einem der Ansprüche 14 bis 17, wobei die Einrichtungen zum Bereitstellen eines Filtergrenzwertes dazu ausgestaltet ist, um den Grenzwertpegel zum Filtern von 0% bis etwa 3,5% des Video-Signalpegels um die Chroma-Unterträger-Frequenz herum einzustellen.

19. Vorrichtung nach einem der Ansprüche 14 bis 18, außerdem mit:
Filtersteuerungseinrichtungen (145, 209, 255), um den Filtergrenzwert in Reaktion auf die Amplitude des Chrominanz-Signals zu verändern.

20. Vorrichtung nach Anspruch 19, wobei die Filtersteuerungseinrichtungen aufweisen:
Einrichtungen (146, 210, 248), um die Amplitude des Chrominanz-Signals zu erfassen; und
Einrichtungen (152, 212, 250), um ein variables Stromsteuersignal in Reaktion auf die erfaßte Amplitude des Chrominanz-Signals zur Verfügung zu stellen.

## Revendications

1. Procédé pour minimiser l'instabilité de la sous-porteuse de chrominance dans un signal vidéo brouillé de ligne, dans lequel le signal de chrominance a été imparfaitement séparé du signal de luminance pour produire un signal de chrominance et un signal de luminance ayant une composante de chrominance résiduelle, le procédé comprenant les étapes consistant à :
décaler en temps ou en position le signal de chrominance pour produire un signal de chrominance brouillé ayant une composante de chrominance stable ;
décaler en temps ou en position le signal de luminance ayant une composante de chrominance résiduelle pour produire un signal de luminance brouillé contenant une composante de chrominance résiduelle instable ;
rejeter une partie du signal de luminance brouillé pour limiter le passage de la composante de chrominance résiduelle instable dans le signal de luminance tout en permettant le passage de signaux ayant des niveaux supérieurs à la composante de chrominance résiduelle instable, pour produire un signal de luminance brouillé ayant une composante de chrominance résiduelle instable minimisée ; et
sommer le signal de chrominance brouillé ayant une composante de chrominance stable avec le signal de luminance brouillé ayant une composante de chrominance résiduelle instable minimisée, pour produire le signal vidéo de ligne brouillé ayant une instabilité minimisée de la sous-porteuse de chrominance.

2. Procédé selon la revendication 1, dans lequel l'étape de rejet comprend :
l'utilisation d'un niveau de seuil fonction d'un niveau de tension sélectionné de la composante de chrominance résiduelle instable dont le passage doit être limité ; et
rejeter une partie de la composante de chrominance résiduelle instable brouillée en dessous dudit niveau de seuil afin de l'éliminer sensiblement du signal de luminance brouillé.

3. Procédé selon la revendication 2, comprenant l'étape consistant à :
détecter l'amplitude du signal de chrominance ; et
faire varier le niveau de seuil en réponse à l'amplitude détectée du signal de chrominance afin de faire varier de manière correspondante le degré de rejet.

4. Procédé selon la revendication 3, comprenant les étapes consistant à :
générer un signal de courant variable représentatif de l'amplitude du signal de chrominance ; et
faire varier le niveau de seuil en réponse au signal de courant variable tout en maintenant constant le gain de signal.

5. Procédé selon la revendication 3 ou 4, dans lequel le niveau de seuil est réglé pour rejeter de 0 % à environ 3,5 % du niveau du signal vidéo d'entrée au voisinage de la fréquence de la sous-porteuse de chrominance.

6. Procédé pour minimiser l'instabilité de la sous-porteuse de chrominance dans un signal vidéo brouillé par un traitement de brouillage de lignes, dans lequel une séparation imparfaite des signaux de chrominance et de luminance pendant le traitement de brouillage produit un signal de luminance ayant une composante de chrominance résiduelle, et le traitement de brouillage génère un signal de chrominance brouillé et un signal de chrominance résiduel instable dans le signal de luminance brouillé, le procédé comprenant les étapes consistant à :
utiliser un seuil déterminant les composantes de chrominance de faible niveau dont le passage doit être empêché dans le signal de luminance ayant une composante de chrominance résiduelle ;
rejeter une partie du signal de luminance ayant une composante de chrominance résiduelle, ou du signal de luminance ayant une composante de chrominance résiduelle instable, audit seuil pour permettre le passage de niveaux de signaux supérieurs à ce seuil tout en empêchant sensiblement le passage des niveaux de signaux de chrominance résiduels ou résiduels instables inférieurs à ce seuil ; et
combiner le signal de luminance soumis au rejet avec le signal de chrominance brouillé pour produire le signal vidéo de ligne brouillé avec une instabilité minimale de la sous-porteuse de chrominance.

7. Procédé selon la revendication 6, dans lequel l'étape de rejet se produit avant le traitement de brouillage de lignes et rejette une partie de la composante de chrominance résiduelle.

8. Procédé selon la revendication 6, dans lequel l'étape de rejet se produit après le traitement de brouillage de lignes et rejette une partie de la composante de chrominance résiduelle instable.

9. Procédé selon l'une quelconque des revendications 6 à 8, comprenant en outre les étapes consistant à :
détecter l'amplitude du signal de chrominance avant ou après le traitement de brouillage ; et
faire varier le seuil de rejet pour faire varier de façon correspondante la profondeur de rejet du signal de luminance proportionnellement à l'amplitude détectée du signal de chrominance.

10. Appareil pour minimiser l'instabilité de la sous-porteuse de chrominance dans un signal vidéo de ligne brouillé, dans lequel le signal de chrominance a été imparfaitement séparé du signal de luminance pour produire un signal de chrominance et un signal de luminance contenant une composante de chrominance résiduelle, l'appareil comprenant :
un moyen de décalage en temps ou en position (58, 80) pour brouiller le signal de luminance contenant une composante de chrominance résiduelle afin de produire un signal de luminance brouillé ayant une composante de chrominance résiduelle instable ;
un moyen de décalage en temps ou en position (60, 82) pour produire un signal de chrominance brouillé ayant une composante de chrominance stable ;
un moyen de rejet de composante de chrominance (62, 84, 100, 120, 170, 190, 220) recevant le signal de luminance brouillé ayant une composante de chrominance résiduelle instable et conçu pour limiter le passage de la composante de chrominance résiduelle instable dans le signal de luminance tout en permettant le passage de signaux ayant des niveaux supérieurs à la composante de chrominance résiduelle instable, pour produire un signal de luminance brouillé ayant une composante de chrominance résiduelle instable minimisée ; et
un moyen de sommation (66, 88) pour combiner le signal de chrominance brouillé ayant une composante de chrominance stable avec le signal de luminance brouillé ayant une composante de chrominance résiduelle instable minimisée, pour produire un signal vidéo de ligne brouillé ayant une instabilité minimisée de la sous-porteuse de chrominance.

11. Appareil pour minimiser l'instabilité de la sous-porteuse de chrominance dans un signal vidéo brouillé au moyen d'un système de brouillage de lignes, dans lequel une séparation imparfaite des signaux de chrominance et de luminance pendant le traitement de brouillage produit un signal de luminance ayant une composante de chrominance résiduelle, et le traitement de brouillage génère un signal de chrominance brouillé et un signal de luminance brouillé ayant une composante de chrominance résiduelle instable, l'appareil comprenant :
un moyen de rejet de composante de chrominance (62, 84, 100, 120, 170, 190, 220) recevant le signal de luminance contenant une composante de chrominance résiduelle et conçu pour empêcher sensiblement le passage de la composante de chrominance résiduelle tout en permettant le passage de signaux ayant des niveaux supérieurs à la composante de chrominance résiduelle, ledit moyen de rejet de composante de chrominance définissant un seuil déterminant les composantes de chrominance de faible niveau dont le passage doit être empêché ; et
un moyen de sommation (66, 88) pour combiner le signal de chrominance brouillé ayant une composante de chrominance stable avec le signal de luminance brouillé ayant une composante de chrominance résiduelle instable minimisée, afin de produire un signal vidéo de ligne brouillé ayant une instabilité minimisée de la sous-porteuse de chrominance.

12. Appareil selon la revendication 10 ou 11, dans lequel ledit moyen de rejet (62, 84, 100, 120, 170, 190, 220) est disposé dans le canal de luminance en amont du moyen de brouillage de lignes (58, 80) destiné au signal de luminance et rejette une partie des signaux de chrominance résiduels.

13. Appareil selon la revendication 10 ou 11, dans lequel ledit moyen de rejet (62, 84, 100, 120, 170, 190, 220) est disposé dans le canal de luminance en aval du moyen de brouillage de lignes (58, 80) destiné au signal de luminance et rejette une partie des signaux de chrominance résiduels instables.

14. Appareil selon l'une quelconque des revendications 10 à 13, dans lequel ledit moyen de rejet comprend :
un moyen destiné à établir un seuil de rejet tel que les signaux de chrominance résiduels soient inférieurs au seuil et que leur passage soit généralement empêché, alors que les signaux supérieurs aux signaux de chrominance résiduels sont au-dessus du seuil et que leur passage est permis.

15. Appareil selon la revendication 14, dans lequel le moyen destiné à établir un seuil de rejet comprend :
un moyen amplificateur limiteur (110, 140, 176, 204) ayant une entrée à maximum sélectionné et un gain de moins un, conçu pour écrêter des signaux supérieurs à l'entrée à maximum sélectionné.

16. Appareil selon la revendication 14, dans lequel le moyen de rejet comprend :
un moyen à filtre (106, 126, 173, 196, 226) pour recevoir le signal de luminance ayant une composante de chrominance résiduelle et pour extraire de celui-ci et fournir un signal à la fréquence de la sous-porteuse de chrominance ;
un moyen amplificateur limiteur (110, 140, 176, 204) sensible au signal fourni par le moyen à filtre pour écrêter le signal à la fréquence de la sous-porteuse de chrominance audit seuil de rejet ; et
un amplificateur sommateur (112, 158 ; 180, 182 ; 202, 240) recevant le signal écrêté et le signal de luminance ayant une composante de chrominance résiduelle pour fournir un signal de luminance ayant une composante de chrominance résiduelle minimisée audit moyen de sommation pour la combinaison.

17. Appareil selon la revendication 16, dans lequel le moyen de rejet comprend en outre :
un amplificateur (108, 130) de gain présélectionné relié au moyen à filtre (106, 126), ledit moyen amplificateur limiteur étant relié audit amplificateur de gain présélectionné ; et
un moyen d'atténuation (111, 156) relié au moyen amplificateur limiteur pour atténuer le signal d'une valeur égale à l'inverse du gain présélectionné de l'amplificateur.

18. Appareil selon l'une quelconque des revendications 14 à 17, dans lequel ledit moyen destiné à établir un seuil de rejet est conçu pour régler le niveau de seuil afin de rejeter d'environ 0 % à environ 3,5 % du niveau du signal vidéo au voisinage de la fréquence de la sous-porteuse de chrominance.

19. Appareil selon l'une quelconque des revendications 14 à 18, comprenant en outre :
un moyen de commande de rejet (145, 209, 255) pour faire varier le seuil de rejet en réponse à l'amplitude du signal de chrominance.

20. Appareil selon la revendication 19, dans lequel le moyen de commande de rejet comprend :
un moyen (146, 210, 248) pour détecter l'amplitude du signal de chrominance ; et
un moyen (152, 212, 250) pour produire uns signal de commande à courant variable en réponse à l'amplitude du signal de chrominance détecté.
